(19) Europäisches Patentamt
European Patent Office
Office européen des brevets

(11) **EP 4 397 196 A1**

(12) **EUROPEAN PATENT APPLICATION**
published in accordance with Art. 153(4) EPC

(43) Date of publication:
**10.07.2024 Bulletin 2024/28**

(51) International Patent Classification (IPC):
**A24F 40/40** (2020.01)   **A24F 40/46** (2020.01)
**A24F 40/50** (2020.01)   **A24F 40/57** (2020.01)
**A24F 47/00** (2020.01)

(21) Application number: **22863008.3**

(22) Date of filing: **03.08.2022**

(86) International application number:
**PCT/CN2022/110077**

(87) International publication number:
**WO 2023/029867 (09.03.2023 Gazette 2023/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.08.2021 CN 202111011140**

(71) Applicant: **Shenzhen Merit Technology Co., Ltd.
Shenzhen, Guangdong 518105 (CN)**

(72) Inventor: **ZHAO, Shumin
Shenzhen, Guangdong 518105 (CN)**

(74) Representative: **Herrero & Asociados, S.L.
Edificio Aqua - Agustín de Foxá, 4-10
28036 Madrid (ES)**

(54) **HEATING ASSEMBLY, AN ELECTRONIC ATOMIZATION DEVICE, AND CONTROL METHOD FOR HEATING ASSEMBLY**

(57)    The present disclosure provides a heating assembly, an electronic atomization device, and a method for controlling a heating assembly. The heating assembly includes a heating element and a controlling unit. The controlling unit detects a current resistance value of the heating element at a current time point, and determines a target resistance value corresponding to a target temperature at the current time point. When the current resistance value is greater than the target resistance value, according to whether a difference between the current resistance value and the target resistance value is not less than a preset threshold, the controlling unit conducts a path between the battery assembly and the heating element within a first time period or a second time period longer than the first time period. By controlling the time length, the temperature of an atomization element is kept at the target temperature to ensure atomization effect.

FIG. 1

## Description

## CROSS REFERENCE TO RELATED APPLICATIONS

The present disclosure claims the priority benefit of Chinese patent application No. 202111011140.5, filed on August 31, 2021, the contents of which are incorporated herein by reference.

## TECHNICAL FIELD

The present disclosure relates to the field of electronic atomization devices, and in particular to a heating assembly, an electronic atomization device, and a method for controlling a heating assembly.

## BACKGROUND

An electronic atomization device is configured to atomize a to-be-atomized substrate, the electronic atomization device can be used in various fields. For example, the electronic atomization device can be used to bake a solid substrate of plant leaves with specific aroma in a heat not burn way resulting in the solid substrate is baked to form aerosol. Moreover, fragrance and flavoring ingredients can be added to the plant leaves and mixed with the aerosol during the baking process, in this way the aerosol has the desired aroma.

The electronic atomization device in the art typically includes a battery assembly and a heating assembly. The heating assembly accommodates the to-be-atomized substrate and includes a heating element, and the battery assembly supplies power to the heating element to heat the to-be-atomized substrate to form aerosol.

However, during atomization process of the electronic atomization device in the art, if the temperature of the heating element is too high, the aerosol may be produced to have a burnt taste; if the temperature of the heating element is too low, the to-be-atomized substrate may not be fully heated and atomized, resulting in poor atomization effect.

## SUMMARY OF THE DISCLOSURE

The present disclosure provides a heating assembly, an electronic atomization device, and a method for controlling the heating assembly, the heating assembly effectively controls the temperature of a heating element to ensure the atomization effect.

In a first aspect, the present disclosure provides a heating assembly, the heating assembly includes a heating element and a controlling unit. The controlling unit is configured to detect a current resistance value of the heating element at a current time point during a heating phase, and to determine a target resistance value corresponding to a target temperature at the current time point. In response to the current resistance value being greater than the target resistance value, and a difference between the current resistance value and the target resistance value being not less than a preset threshold, the controlling unit is configured to conduct a path between a battery assembly connected to the heating assembly and the heating element within a first time period to drive the heating element to work during the first time period. In response to the current resistance value being greater than the target resistance value, and the difference between the current resistance value and the target resistance value being less than the preset threshold, the controlling unit is configured to conduct the path between the battery assembly and the heating element within a second time period to drive the heating element to work during the second time period. The second time period is longer than the first time period.

In some embodiments, in response to the current resistance value being not greater than the target resistance value, the controlling unit is configured to conduct the path between the battery assembly and the heating element within a third time period to drive the heating element to work during the third time period. The third time period is longer than the second time period.

In some embodiments, a cut-off time period is defined between two adjacent first time periods, between two adjacent second time periods, between two adjacent third time periods, between the first time period and the second time period adjacent to the first time period, between the first time period and the third time period adjacent to the first time period, or between the second time period and the third time period adjacent to the second time period. The cut-off time period has a fixed time length.

In some embodiments, the heating assembly further includes a switching unit. The switching unit is located on the path between the heating element and the battery assembly. The controlling unit is connected to the switching unit to control a conduction of the switching unit, so as to conduct the path between the battery assembly and the heating element within the first time period, the second time period, or the third time period.

In some embodiments, the heating element includes a heating unit and a temperature measuring unit. The heating unit is connected to the battery assembly through the switching unit. The temperature measuring unit is in-parallel connected to the heating unit and is connected to the controlling unit, enabling the controlling unit to detect the current resistance value of the heating element through the temperature measuring unit. The heating assembly includes a sampling unit connected in series with the temperature measuring unit. The sampling unit is connected to the controlling unit, enabling the controlling unit to detect a current flowing through the sampling unit and the temperature measuring unit through the sampling unit, and a resistance value of the temperature measuring unit is determined. The resistance value of the temperature measuring unit represents the current resistance value of the heating element.

In some embodiments, the first time period, the second time period, and the third time period are adjustable.

In some embodiments, the controlling unit includes a proportional-integral-differential controller (PID controller) to adjust the first time period, the second time period, or the third time period, according to the fixed time length cut-off time period, the current resistance value, and the target resistance value.

In some embodiments, a first ratio of the first time period to a first time sum is adjustable, the first ratio is greater than 0 and less than or equal to 99.9%, and the first time sum is a sum of the first time period and the cut-off time period. And/or, a second ratio of the second time period to a second time sum is adjustable, the second ratio is greater than 0 and less than or equal to 99.9%, and the second time sum is a sum of the second time period and the cut-off time period. And/or, a third ratio of the third time period to a third time sum is adjustable, the third ratio is greater than 0 and less than or equal to 99.9%, and the third time sum is a sum of the third time period and the cut-off time period.

In some embodiments, the controlling unit is configured to detect the current resistance value of the heating element at the current time point within the cut-off time period.

In some embodiments, the target temperature of the heating element at the current time point is determined according to a preset temperature-time curve of the heating element within the heating phase. The target resistance value corresponding to the target temperature is determined according to a preset temperature-resistance relationship table.

In a second aspect, the present disclosure provides a method for controlling a heating assembly, and the method includes:

detecting a current resistance value of a heating element at a current time point during a heating phase, and determining a target resistance value corresponding to a target temperature at the current time point;

in response to the current resistance value being greater than the target resistance value, and a difference between the current resistance value and the target resistance value being not less than a preset threshold, a controlling unit is configured to conduct a path between a battery assembly connected to the heating assembly and the heating element within a first time period to drive the heating element to work during the first time period;

in response to the current resistance value being greater than the target resistance value, and the difference between the current resistance value and the target resistance value being less than the preset threshold, the controlling unit is configured to conduct the path between the battery assembly and the heating element within a second time period to drive the heating element to work during the second time period;

wherein the second time period is longer than the first time period.

In some embodiments, conducting, in response to the current resistance value being not greater than the target resistance value, the path between the battery assembly and the heating element within a third time period to drive the heating element to work during the third time period. The third time period is longer than the second time period.

In a third aspect, the present disclosure provides an electronic atomization device, the electronic atomization device includes the heating assembly according to any one of embodiments mentioned above and a battery assembly. The battery assembly is configured to supply power the heating assembly.

In the present disclosure, the heating assembly includes the heating element and the controlling unit. The controlling unit is configured to detect the current resistance value of the heating element at the current time point during the heating phase, and to determine the target resistance value corresponding to the target temperature at the current time point. In response to the current resistance value being greater than the target resistance value, and the difference between the current resistance value and the target resistance value being not less than the preset threshold, the controlling unit conducts the path between the battery assembly connected to the heating assembly and the heating element within the first time period to drive the heating element to work during the first time period. In response to the current resistance value being greater than the target resistance value, and the difference between the current resistance value and the target resistance value being less than the preset threshold, the controlling unit conducts the path between the battery assembly and the heating element within the second time period to drive the heating element to work during the second time period. The second time period is longer than the first time period. By controlling a heating time length of the heating element, the temperature of the heating element can be effectively controlled to ensure the atomization effect.

## BRIEF DESCRIPTION OF THE DRAWINGS

In order to more clearly illustrate technical solutions in the embodiments of the present disclosure, drawings required for the description of the embodiments will be briefly introduced below. Obviously, the drawings in the following description are only some embodiments of the present disclosure. For those skilled in the art, other drawings can be obtained according to these drawings without any creative labor.

FIG. 1 is a structural schematic view of a heating assembly according to an embodiment of the present disclosure.

FIG. 2 is a time-sequence chart of a switching unit according to an embodiment of the present disclosure.

FIG. 3 is a circuit diagram of the heating assembly according to an embodiment of the present disclosure.

FIG. 4 is a flow chart of a controlling method of a controlling unit according to an embodiment of the present disclosure.

FIG. 5 is a flow chart of a method for controlling the heating assembly according to an embodiment of the present disclosure.

FIG. 6 is a flow chart of the method for controlling the heating assembly according to another embodiment of the present disclosure.

FIG. 7 is a structural schematic view of an electronic atomization device according to an embodiment of the present disclosure.

## DETAILED DESCRIPTION

The technical solutions in the embodiments of the present disclosure will be clearly and completely described below in combination with the accompanying drawings in the embodiments of the present disclosure. Obviously, the described embodiments are only part of the embodiments of the present disclosure, but not all of the embodiments. Based on the embodiments in the present disclosure, all other embodiments obtained by those skilled in the art without creative work fall within a protection scope of the present disclosure.

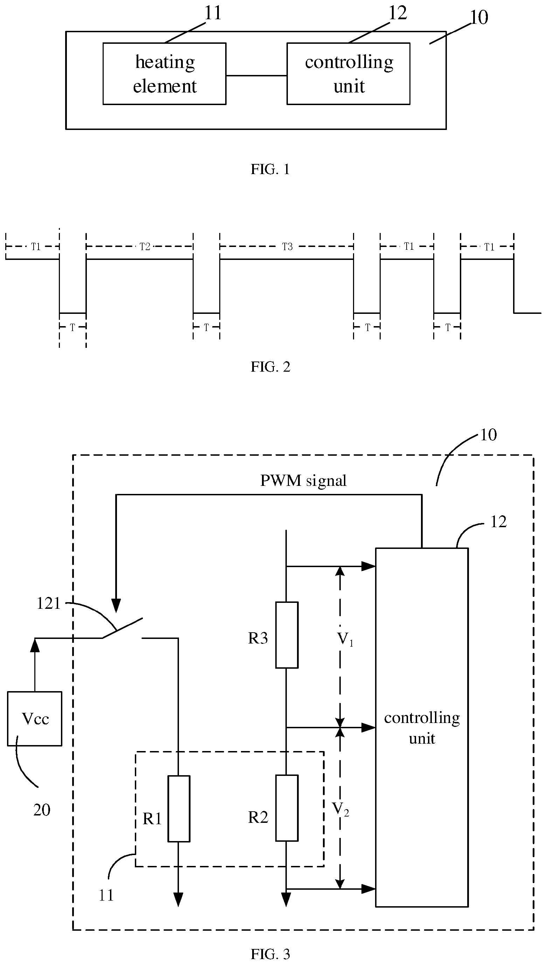

As shown in FIG. 1, FIG. 1 is a structural schematic view of a heating assembly according to an embodiment of the present disclosure. The heating assembly 10 includes a heating element 11 and a controlling unit 12. The controlling unit 12 controls the heating element 11 to heat a to-be-atomized substrate to form aerosol.

In detail, the controlling unit 12 is configured to detect a current resistance value Rx of the heating element 11 at a current time point during a heating phase, and to determine a target resistance value Rt corresponding to a target temperature at the current time point. A heating time length of the heating element 11 is controlled based on a relationship between the current resistance value Rx and the target resistance value Rt. It can be understood that, in practical applications, the higher a resistance value, the higher a corresponding temperature. Therefore, when the current resistance value Rx is greater than the target resistance value Rt, it can be determined that a temperature corresponding to the current resistance value Rx is greater than a temperature corresponding to the target resistance value Rt.

In some embodiments, as shown in FIG. 2, when the current resistance value Rx is greater than the target resistance value Rt, and a difference between the current resistance value Rx and the target resistance value Rt is not less than a preset threshold, the controlling unit 12 conducts a path between a battery assembly 20 connected to the heating assembly 10 and the heating element 11 within a first time period T1, driving the heating element 11 to work during the first time period T1. When the current resistance value Rx is greater than the target resistance value Rt, and the difference between the current resistance value Rx and the target resistance value Rt is less than the preset threshold, the controlling unit 12 conducts the path between the battery assembly 20 and the heating element 11 within a second time period T2, driving the heating element 11 to work during the second time period T2. The second time period T2 is longer than the first time period T1.

In detail, the temperature corresponding to the current resistance value Rx represents a current temperature, the temperature corresponding to the target resistance value Rt represents a current target temperature. That is, when the current temperature is greater than the current target temperature, and a temperature difference between the current temperature and the current target temperature is significantly great, the current temperature is needed to be reduced. In this case, the heating element 11 works for a relatively short time, such as the first time period T1. When the current temperature is greater than the current target temperature, and the temperature difference between the current temperature and the current target temperature is relatively less, the heating element 11 works for a relatively long time, such as the second time period T2.

In detail, a temperature-resistance relationship table and a temperature-time curve are stored in advance. When the current resistance value Rx corresponding to the current time point is detected, the current temperature corresponding to the current resistance value Rx is determined based on the temperature-resistance relationship table. Further, the target temperature corresponding to the current time point can be obtained based on the temperature-time curve according to the time of the current moment. Further, the target resistance value Rt corresponding to the target temperature can be determined from the temperature-resistance relationship table based on the target temperature.

It can be understood that, when the controlling unit 12 detects that the current resistance value Rx of the heating element 11 at the current time point is greater than the target resistance value Rt at the current time point, and the difference between the current resistance value Rx and the target resistance value Rt is greater than or equal to the preset threshold, at this time, the temperature of the heating element 11 is relatively high, the heating element 11 can maintain the heating of the to-be-atomized substrate for a certain time, and the heating element 11 is needed to work for a relatively short time to ensure the heating effect of the heating element 11 can be maintained. When the difference between the current resistance value Rx of the heating element 11 and the target resistance value Rt is less than the preset threshold, at this time, the heating effect of the heating element 11 is not ideal, and a part of the to-be-atomized substrate may not be fully heated, therefore the heating element 11 is needed to work and generate heat for a relatively long time to ensure the heating element 11 to be at a relatively high temperature to fully heat the to-be-atomized substrate. In this way, the temperature of the heating element can be effectively controlled, avoiding high temperature causing phenomena such as burnt smell and ensuring the atomization effect.

In an embodiment, the controlling unit 12 is further configured to conduct the path between the battery assembly 20 and the heating element 11 within a third time period T3, when the current resistance value Rx is not greater than the target resistance value Rt, driving the heating element 11 to work during the third time period T3. The third time period T3 is longer than the second time period T2. It can be understood that, when an actual resistance value of the heating element 11 at the current time point is less than the target resistance value Rt, the heating element 11 cannot fully heat the to-be-atomized substrate. At this time, it is necessary to ensure that not only an actual temperature of the heating element 11 meets a requirement of the target temperature, but also the actual temperature of the heating element 11 is greater than a sum of the target temperature and the preset threshold. Therefore, a time length of the third time period T3 is greater than that of the second time period T2.

In order to prevent the heating element 11 from heating for a long time, causing the temperature of the heating element 11 to be too high, and prevent excessive temperature of the heating element 11 from damaging the heating element 11 and other components. In an embodiment, a cut-off time period T is set between two adjacent first time periods T1, between two adjacent second time periods T2, between two adjacent third time periods T3, between the first time period T1 and the second time period T2 adjacent to the first time period T1, between the first time period T1 and the third time period T3 adjacent to the first time period T1, or between the second time period T2 and the third time period T3 adjacent to the second time period T2. During the cut-off time period T, the controlling unit 12 controls the path between the battery assembly 20 and the heating element 11 to be disconnected, the battery assembly 20 dose not power the heating element 11, and an atomization assembly continuously heats the to-be-atomized substrate by utilizing residual heat after generated within the first time period T1, the second time period T2, or the third time period T3. The cut-off time period T has a fixed time length. That is, all the cut-off time periods T has a same amount of a change in the resistance value of an atomization element 11 and a same amount of a change in the temperature of the heating element 11. In addition, the actual temperature of the heating element 11 is lower than the target temperature during the cut-off time period T. Therefore, the controlling unit 12 controls the heating time length of the heating element 11 in a next heating cycle, according to a falling temperature of the heating element 11 during the cut-off time period T and the actual temperature of the heating element 11 detected in a previous heating cycle, enabling the actual temperature of the heating element 11 in the next heating cycle to sufficiently heat the to-be-atomized substrate.

By setting the fixed time length cut-off time period T between two adjacent heating cycles, on one hand, overheating of the heating element 11 which may damage the heating element 11 and the other components can be prevented, and on the other hand, an energy conversion rate can be improved and a battery life of the electronic atomization device can be increased.

In an embodiment, as shown in FIG. 3, FIG. 3 is a circuit diagram of the heating assembly according to an embodiment of the present disclosure. The heating assembly 10 further includes a switching unit 121, the switching unit 121 is located on the path between the heating element 11 and the battery assembly 20. Wherein, the controlling unit 12 is connected to the switching unit 121 to control a conduction of the switching unit 121, so as to conduct the path between the battery assembly 20 and the heating element 11 within the first time period T1, the second time period T2, or the third time period T3, enabling the heating element 11 to heat the to-be-atomized substrate to form aerosol.

In an embodiment, the heating element 11 includes a heating unit R1 and a temperature measuring unit R2. Wherein, the heating unit R1 is connected to the battery assembly 20 through the switching unit 121. If the switching unit 121 is in a conduction state, the battery assembly 20 supplies power to the heating unit R1, in this way the heating unit R1 works and generates heat to heat the to-be-atomized substrate. The temperature measuring unit R2 is in-parallel connected to the heating unit R1 and is connected to the controlling unit 12, enabling the controlling unit 12 to detect the current resistance value Rx of the heating unit R1 through the temperature measuring unit R2. In an embodiment, the switching unit 21 is a metal-oxide-semiconductor field-effect transistor (MOS transistor).

The heating assembly 10 further includes a sampling unit R3, the sampling unit R3 is connected in series with the temperature measuring unit R2, and the sampling unit R3 is connected to the controlling unit 12. The controlling unit 12 detects a current flowing through the sampling unit R3 and the temperature measuring unit R2 to determine a resistance value of the temperature measuring unit R2 through the sampling unit R3. Wherein, the resistance value of the temperature measuring unit R2 represents the current resistance value Rx of the heating element 11. It can be understood that, a current resistance value of the temperature measuring unit R2 is a current resistance value of the heating element 11. In detail, the controlling unit 12 can detect the current I3 flowing through the sampling unit R3, the resistance value of the sampling unit R3 is known, and a voltage V1 of the sampling unit R3 can be calculated. According to the voltage division principle of a series circuit, a voltage V2 of the temperature measuring unit R2 is a voltage of the battery assembly 20 minus the voltage V1 of the sampling unit R3, and then the resistance value of the temperature measuring unit R2 at the current time point is obtained through a resistance calculation formula as follow:

$$R2 = \frac{V2}{Is} = \frac{V2}{\frac{V1}{R3}} = \frac{V2 * R3}{V1}.$$

In addition, the resistance of the temperature measuring unit R2 represents the current resistance value Rx of the heating element 11, in this way the current resistance value Rx of the heating element 11 at the current time point is obtained. The controlling unit 12 compares the current resistance value Rx of the temperature measuring element at the current time point, the target resistance value Rt corresponding to the target temperature at the current time point, and the preset threshold, to drive the battery assembly 20 to power the heating element 11 for the first time period T1, the second time period T2, or the third time period T3.

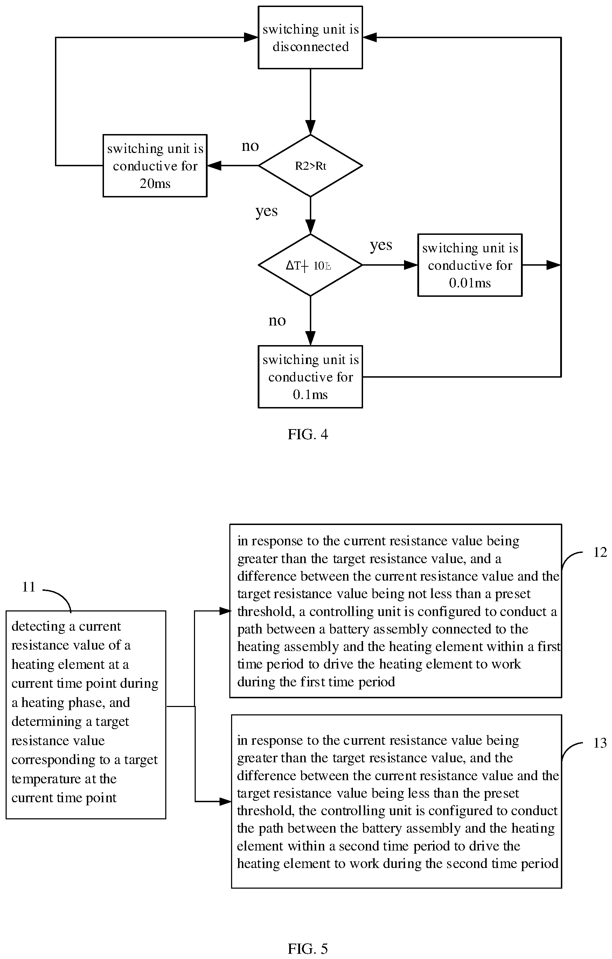

In an embodiment, the first time period T1, the second time period T2, and the third time period T3 are adjustable. As shown in FIG. 4, FIG. 4 is a flow chart of a controlling method of a controlling unit according to an embodiment of the present disclosure. If the switching unit 121 is disconnected, the controlling unit 12 samples the current resistance value Rx of the heating element 11 at the current time point, and compares the current resistance value Rx with the target resistance value Rt corresponding to the target temperature at the current time point. When the current resistance value Rx is greater than the target resistance value Rt, whether the difference between the current resistance value Rx and the target resistance value Rt is greater than or equal to the preset threshold is compared. When the current resistance value Rx is greater than or equal to the preset threshold, in the next heating cycle, the switching unit 121 is conductive, and the battery assembly 20 heats the heating element 11 continuously for 0.01 ms (millisecond). When the difference between the current resistance value Rx and the target resistance value Rt is less than the preset threshold, in the next heating cycle, the switching unit 121 is conductive, and the battery assembly 20 heats the heating element 11 continuously for 0.1 ms. When the current resistance value Rx is less than the target resistance value Rt, in the next heating cycle, the switching unit 121 is conductive, and the battery assembly 20 heats the heating element 11 continuously for 20 ms. In this embodiment, the values of 0.01 ms, 0.1 ms, 1 ms, and 20 ms are for illustrative purposes only, and the actual values are selected according to the specific situation.

In an embodiment, the controlling unit 12 includes a proportional-integral-differential controller (PID controller) to adjust the first time period T1, the second time period T2, or the third time period T3, according to the fixed time length cut-off time period T, the current resistance value Rx, and the target resistance value Rt.

In detail, the first time period T1, the second time period T2, and the third time period T3 are adjusted according to a duty cycle. For example, the fixed time length cut-off time period T is Toff, one heating cycle such as the first time period T1, the second time period T2, or the third time period T3 is Ton, and one fixed time length cut-off time period Toff and one heating cycle Ton are one time sum. According to the duty cycle formula, it can be known that an adjustable duty cycle of one heating cycle Ton ranges from 0 to 99.9%. The duty cycle formula is as follow:

$$99.9\% \geq \frac{Ton}{Ton + Toff} > 0.$$

That is, a first ratio of the first time period T1 to a first time sum is adjustable, and the first ratio is greater than 0 and less than or equal to 99.9%. And/or, a second ratio of the second time period T2 to a second time sum is adjustable, and the second ratio is greater than 0 and less than or equal to 99.9%. And/or, a third ratio of the third time period T3 to a third time sum is adjustable, and the third ratio is greater than 0 and less than or equal to 99.9%.

In an embodiment, the controlling unit 12 detects the current resistance value Rx of the heating element 11 at the current time point within the cut-off time period T.

In an embodiment, the heating assembly 10 is preset with a temperature-time curve and a temperature-resistance relationship table in the controlling unit 12. The target temperature of the heating element 11 at the current time point is determined according to the preset temperature-time curve of the heating element 11 within a heating phase. The target resistance value Rt corresponding to the target temperature is determined according to the preset temperature-resistance relationship table. When the current resistance value Rx is greater than the target resistance value Rt, and the difference between the current resistance value Rx and the target resistance value Rt is not less than (that is equal to or greater than) the preset threshold, the controlling unit 12 conducts the path between the battery assembly 20 connected to the heating assembly 10 and the heating element 11 within the first time period T1, driving the heating element 11 to work during the first time period T1. When the current resistance value Rx is greater than the target resistance value Rt, and the difference between the current resistance value Rx and the target resistance value Rt is less than the preset threshold, the controlling unit 12 conducts the path between the battery assembly 20 and the heating element 11 within the second time period T2, driving the heating element 11 to work during the second time period T2.

This present disclosure provides the heating assembly 10, detecting the current resistance value Rx of the heating element 11 at the current time point during the heating phase through the controlling unit 12, comparing with the target resistance value Rt pre-stored corresponding to the target temperature at the current time point, and comparing a difference between the target temperature and the current temperature with a preset threshold temperature. The conduction of the switching unit 121 is controlled through a PWM signal, in this way, the time length for the battery assembly 20 to power the heating element 11 is adjusted, the actual temperature of the heating element 11 is controlled to be near the preset target temperature, and the atomization effect of the heating assembly 10 is ensured.

The PWM signal is a pulse width modulation signal. This present disclosure drives the conduction and cutoff of the switching unit by utilizing the PWM signal, adjusts the duty cycle of the PWM signal, and adjusts a conduction time and a cutoff time of the switching unit.

As shown in FIG. 5, FIG. 5 is a flow chart of a method for controlling the heating assembly according to an embodiment of the present disclosure. The method can begin at block 11.

At block 11, a current resistance value of a heating element at a current time point during a heating phase is detected, and a target resistance value corresponding to a target temperature at the current time point is determined.

In detail, the current resistance value Rx of the heating element at the current time point during the heating phase is detected, and the target resistance value Rt corresponding to the target temperature at the current time point is determined. A heating time length of the heating element is controlled based on a relationship between the current resistance value Rx and the target resistance value Rt. It can be understood that, in practical applications, the higher a resistance value, the higher a corresponding temperature. Therefore, when the current resistance value Rx is greater than the target resistance value Rt, it can be determined that a temperature corresponding to the current resistance value Rx is greater than a temperature corresponding to the target resistance value Rt.

At block 12, in response to the current resistance value being greater than the target resistance value, and a difference between the current resistance value and the target resistance value being not less than a preset threshold, the controlling unit conducts a path between the battery assembly connected to the heating assembly and the heating element within a first time period T1, driving the heating element to work during the first time period.

When the current resistance value Rx of the heating element at the current time point is greater than the target resistance value Rt at the current time point, and the difference between the current resistance value Rx and the target resistance value Rt is greater than or equal to the preset threshold are detected, at this time, the temperature of the heating element is relatively high, the heating element can fully heat the to-be-atomized substrate, and the heating element is needed to work for a relatively short time to ensure the heating effect of the heating element. Therefore, the heating element is driven during the first time period.

At block 13, in response to the current resistance value being greater than the target resistance value, and the difference between the current resistance value and the target resistance value being less than the preset threshold, the controlling unit conducts the path between the battery assembly and the heating element within a second time period, driving the heating element to work during the second time period.

When the difference between the current resistance value Rx of the heating element and the target resistance value Rt is less than the preset threshold, the heating effect of the heating element is not ideal, and a part of the to-be-atomized substrate may not be fully heated, therefore the heating element is needed to work for a relatively long time to ensure the heating element to be at a relatively high temperature to fully heat the to-be-atomized substrate. By controlling the temperature of the heating element, a phenomena such as burnt smell can be avoided if the temperature is too high, ensuring the atomization effect. Therefore, the heating element is driven during the second time period. The second time period is longer than the first time period.

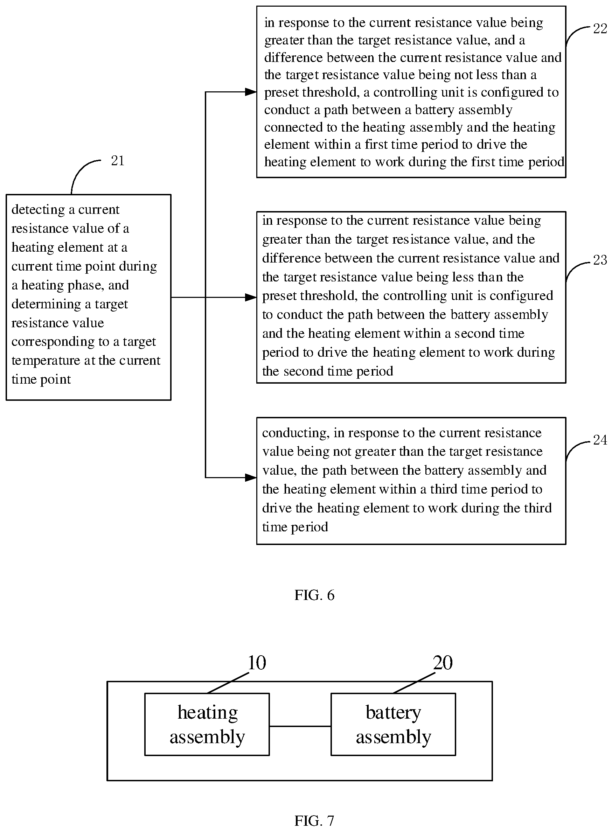

As shown in FIG. 6, in another embodiment, in response to the current resistance value is not greater than the target resistance value, the path between the battery assembly and the heating element is conducted within a third time period, driving the heating element to work during the third time period. The third time period is longer than the second time period. That is, when an actual resistance value of the heating element at the current time point is less than the target resistance value Rt, the heating element cannot fully heat the to-be-atomized substrate. At this time, it is necessary to ensure that not only an actual temperature of the heating element meets a requirement of the target temperature, but also the actual temperature of the heating element is greater than a sum of the target temperature and the preset threshold. As a result, the heating element needs to be driven over a longer time period.

This present disclosure provides the method for controlling the heating assembly, detecting the current resistance value Rx of the heating element at the current time point during the heating phase, comparing the target resistance value Rt pre-stored corresponding to the target temperature at the current time point with the preset threshold. The conduction of the switching unit is controlled through the PWM signal, in this way, the heating time length of the heating element is adjusted, the actual temperature of the heating element is controlled to be near the preset target temperature, and the atomization effect of the heating assembly is ensured.

As shown in FIG. 7. FIG. 7 is a structural schematic view of an electronic atomization device according to an embodiment of the present disclosure. The electronic atomization device includes the heating assembly 10 and the battery assembly 20. Wherein, the heating assembly 10 can be inserted into a solid to-be-atomized substrate or can be surrounded outside the to-be-atomized substrate. The battery assembly 20 is electrically connected to the heating assembly 10 to supply power to the heating assembly 10, enabling the heating assembly 10 to heat the to-be-atomized substrate to form aerosol.

The above description is only embodiments of the present disclosure and is not intended to limit the scope of the present disclosure. Any equivalent structural transformations or equivalent process transformations made by using the contents of the description and the drawings of the present disclosure, or directly or indirectly applied to other related technical fields, is included within the scope of the present disclosure.

## Claims

1.   A heating assembly, comprising:

a heating element; and
a controlling unit, configured to detect a current resistance value of the heating element at a current time point during a heating phase, and to determine a target resistance value corresponding to a target temperature at the current time point;
wherein, in response to the current resistance value being greater than the target resistance value, and a difference between the current resistance value and the target resistance value being not less than a preset threshold, the controlling unit is configured to conduct a path between a battery assembly connected to the heating assembly and the heating element within a first time period to drive the heating element to work during the first time period;
in response to the current resistance value being greater than the target resistance value, and the difference between the current resistance value and the target resistance value being less than the preset threshold, the controlling unit is configured to conduct the path between the battery assembly and the heating element within a second time period to drive the heating element to work during the second time period; and
the second time period is longer than the first time period.

2.   The heating assembly as claimed in claim 1, wherein,

in response to the current resistance value being not greater than the target resistance value, the controlling unit is configured to conduct the path between the battery assembly and the heating element within a third time period to drive the heating element to work during the third time period; and
the third time period is longer than the second time period.

3.   The heating assembly as claimed in claim 1, wherein a cut-off time period is set between two adjacent first time periods, between two adjacent second time periods, between two adjacent third time periods, between the first time period and the second time period adjacent to the first time period, between the first time period and the third time period adjacent to the first time period, or between the second time period and the third time period adjacent to the second time period; and
the cut-off time period has a fixed time length.

4.   The heating assembly as claimed in claim 3, further comprising:

a switching unit, located on the path between the heating element and the battery assembly; wherein the controlling unit is connected to the switching unit to control a conduction of the switching unit, so as to conduct the path between the battery assembly and the heating element within the first time period, the second time period, or the third time period.

5.   The heating assembly as claimed in claim 4, wherein,

the heating element comprises a heating unit and a temperature measuring unit, the heating unit is connected to the battery assembly through the switching unit, the temperature measuring unit is in-parallel connected to the heating unit and is connected to the controlling unit, enabling the controlling unit to detect the current resistance value of the heating element through the temperature measuring unit;
the heating assembly comprises a sampling unit connected in series with the temperature measuring unit, the sampling unit is connected to the controlling unit, enabling the controlling unit to detect a current flowing through the sampling unit and the temperature measuring unit through the sampling unit, and a resistance value of the temperature measuring unit is determined; the resistance value of the temperature measuring unit represents the current resistance value of the heating element.

6. The heating assembly as claimed in claim 3, wherein the first time period, the second time period, and the third time period are adjustable.

7. The heating assembly as claimed in claim 6, wherein the controlling unit comprises a proportional-integral-differential controller (PID controller) to adjust the first time period, the second time period, or the third time period, according to the fixed time length cut-off time period, the current resistance value, and the target resistance value.

8. The heating assembly as claimed in claim 7, wherein,

a first ratio of the first time period to a first time sum is adjustable, the first ratio is greater than 0 and less than or equal to 99.9%, and the first time sum is a sum of the first time period and the cut-off time period; and/or
a second ratio of the second time period to a second time sum is adjustable, the second ratio is greater than 0 and less than or equal to 99.9%, and the second time sum is a sum of the second time period and the cut-off time period; and/or
a third ratio of the third time period to a third time sum is adjustable, the third ratio is greater than 0 and less than or equal to 99.9%, and the third time sum is a sum of the third time period and the cut-off time period.

9. The heating assembly as claimed in claim 3, wherein the controlling unit is configured to detect the current resistance value of the heating element at the current time point within the cut-off time period.

10. The heating assembly as claimed in claim 1, wherein the target temperature of the heating element at the current time point is determined according to a preset temperature-time curve of the heating element within the heating phase; the target resistance value corresponding to the target temperature is determined according to a preset temperature-resistance relationship table.

11. A method for controlling a heating assembly, comprising:

detecting a current resistance value of a heating element at a current time point during a heating phase, and determining a target resistance value corresponding to a target temperature at the current time point;
in response to the current resistance value being greater than the target resistance value, and a difference between the current resistance value and the target resistance value being not less than a preset threshold, a controlling unit is configured to conduct a path between a battery assembly connected to the heating assembly and the heating element within a first time period to drive the heating element to work during the first time period;
in response to the current resistance value being greater than the target resistance value, and the difference between the current resistance value and the target resistance value being less than the preset threshold, the controlling unit is configured to conduct the path between the battery assembly and the heating element within a second time period to drive the heating element to work during the second time period;
wherein the second time period is longer than the first time period.

12. The method as claimed in claim 11, further comprising:

conducting, in response to the current resistance value being not greater than the target resistance value, the path between the battery assembly and the heating element within a third time period to drive the heating element to work during the third time period;
wherein the third time period is longer than the second time period.

13. An electronic atomization device, comprising:

the heating assembly according to any one of claims 1 to 10; and
a battery assembly, configured to supply power to the heating assembly.

heating element

controlling unit

11 12 10

FIG. 1

T1 T2 T3 T1 T1

T T T T

FIG. 2

PWM signal

10

12

121

Vcc

20

R1 R2 R3

11

V$_1$

V$_2$

controlling unit

FIG. 3

switching unit is
disconnected

no

switching unit is
conductive for
20ms

R2>Rt

yes

ΔT≤ 10℃

yes

switching unit is
conductive for
0.01ms

no

switching unit is
conductive for
0.1ms

FIG. 4

11

detecting a current
resistance value of a
heating element at a
current time point during
a heating phase, and
determining a target
resistance value
corresponding to a target
temperature at the
current time point

in response to the current resistance value being
greater than the target resistance value, and a
difference between the current resistance value and the
target resistance value being not less than a preset
threshold, a controlling unit is configured to conduct a
path between a battery assembly connected to the
heating assembly and the heating element within a first
time period to drive the heating element to work
during the first time period

12

in response to the current resistance value being
greater than the target resistance value, and the
difference between the current resistance value and the
target resistance value being less than the preset
threshold, the controlling unit is configured to conduct
the path between the battery assembly and the heating
element within a second time period to drive the
heating element to work during the second time period

13

FIG. 5

detecting a current resistance value of a heating element at a current time point during a heating phase, and determining a target resistance value corresponding to a target temperature at the current time point — 21

in response to the current resistance value being greater than the target resistance value, and a difference between the current resistance value and the target resistance value being not less than a preset threshold, a controlling unit is configured to conduct a path between a battery assembly connected to the heating assembly and the heating element within a first time period to drive the heating element to work during the first time period — 22

in response to the current resistance value being greater than the target resistance value, and the difference between the current resistance value and the target resistance value being less than the preset threshold, the controlling unit is configured to conduct the path between the battery assembly and the heating element within a second time period to drive the heating element to work during the second time period — 23

conducting, in response to the current resistance value being not greater than the target resistance value, the path between the battery assembly and the heating element within a third time period to drive the heating element to work during the third time period — 24

FIG. 6

10          20

heating assembly          battery assembly

FIG. 7

## INTERNATIONAL SEARCH REPORT

| International application No. |
|---|
| **PCT/CN2022/110077** |

**A.    CLASSIFICATION OF SUBJECT MATTER**

A24F 40/40(2020.01)i;   A24F 40/46(2020.01)i;   A24F 40/50(2020.01)i;   A24F 40/57(2020.01)i;   A24F 47/00(2020.01)i

According to International Patent Classification (IPC) or to both national classification and IPC

**B.    FIELDS SEARCHED**

Minimum documentation searched (classification system followed by classification symbols)

A24F

Documentation searched other than minimum documentation to the extent that such documents are included in the fields searched

Electronic data base consulted during the international search (name of data base and, where practicable, search terms used)

CNTXT; CNKI; VCN; VEN; WPABS; ENTXT: 电阻, 阻值, 阈值, 差值, 变化值, 温度, PWM, 占空比, 脉宽调制, Pulse Width Modulat+, resistance, threshold, differ+, Duty cycle

**C.    DOCUMENTS CONSIDERED TO BE RELEVANT**

| Category* | Citation of document, with indication, where appropriate, of the relevant passages | Relevant to claim No. |
|---|---|---|
| PX | CN 113907421 A (SHENZHEN MAISHI TECHNOLOGY CO., LTD.) 11 January 2022 (2022-01-11)<br>    claims 1-13 | 1-13 |
| X | CN 110771960 A (SHENZHEN MAISHI TECHNOLOGY CO., LTD.) 11 February 2020 (2020-02-11)<br>    description, paragraphs [0025]-[0079], and figures 1-8 | 1-13 |
| X | CN 112545061 A (VO TECH (SHENZHEN) CO., LTD.) 26 March 2021 (2021-03-26)<br>    description, paragraphs [0028]-[0071], and figures 1-4 | 1-13 |
| A | CN 108652089 A (SHENZHEN FIRST UNION TECHNOLOGY CO., LTD.) 16 October 2018 (2018-10-16)<br>    entire document | 1-13 |
| A | CN 109588782 A (LYUYAN INDUSTRIAL (SHENZHEN) CO., LTD.) 09 April 2019 (2019-04-09)<br>    entire document | 1-13 |
| A | CN 111802710 A (SHENZHEN FEIMO TECHNOLOGY CO., LTD.) 23 October 2020 (2020-10-23)<br>    entire document | 1-13 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 September 2022** | **18 October 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/110077**

| Patent document cited in search report | | | Publication date (day/month/year) | Patent family member(s) | | | Publication date (day/month/year) |
|---|---|---|---|---|---|---|---|
| CN | 113907421 | A | 11 January 2022 | None | | | |
| CN | 110771960 | A | 11 February 2020 | WO | 2021047423 | A1 | 18 March 2021 |
| | | | | KR | 20220056227 | A | 04 May 2022 |
| | | | | US | 2022192276 | A1 | 23 June 2022 |
| CN | 112545061 | A | 26 March 2021 | None | | | |
| CN | 108652089 | A | 16 October 2018 | KR | 20210068397 | A | 09 June 2021 |
| | | | | WO | 2020029923 | A1 | 13 February 2020 |
| | | | | JP | 2021532816 | A | 02 December 2021 |
| | | | | EP | 3818861 | A1 | 12 May 2021 |
| | | | | US | 2021298364 | A1 | 30 September 2021 |
| | | | | EP | 3818861 | A4 | 20 October 2021 |
| CN | 109588782 | A | 09 April 2019 | None | | | |
| CN | 111802710 | A | 23 October 2020 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111011140